(19) **Europäisches Patentamt**

**European Patent Office**

**Office européen des brevets**

(11) **EP 0 796 735 B1**

(12) **FASCICULE DE BREVET EUROPEEN**

(45) Date de publication et mention
de la délivrance du brevet:
**01.08.2001 Bulletin 2001/31**

(51) Int Cl.⁷: $B41F\ 33/00$

(21) Numéro de dépôt: **97810160.8**

(22) Date de dépôt: **18.03.1997**

(54) **Procédé de contrôle automatique de la qualité d'impression d'une image multichrome**

Verfahren zur Druckqualitätskontrolle eines Mehrfarbenbildes

Procedure for controlling printing quality of a multicolour image

(84) Etats contractants désignés:
**AT CH DE FR GB IT LI SE**

(30) Priorité: **22.03.1996 IT MI960568**

(43) Date de publication de la demande:
**24.09.1997 Bulletin 1997/39**

(73) Titulaire: **DE LA RUE GIORI S.A.**
**1003 Lausanne (CH)**

(72) Inventeur: **Stringa, Luigi**
**38050 Trento (IT)**

(74) Mandataire: **Jörchel, Dietrich R.A. et al**
**c/o BUGNION S.A.**
**10, route de Florissant**
**Case postale 375**
**1211 Genève 12 Champel (CH)**

(56) Documents cités:
**EP-A- 0 064 024      EP-A- 0 127 831**
**EP-A- 0 142 470      EP-A- 0 255 586**
**EP-A- 0 443 062      EP-A- 0 598 490**
**EP-A- 0 705 784      WO-A-94/25278**
**DE-A- 4 104 537**

## Description

La présente invention concerne un procédé de traitement des signaux pour contrôle automatique de la qualité d'impression d'une image multichrome au moyen d'au moins un dispositif optoélectronique permettant d'obtenir un signal Si par canal chromatique.

Des procédés et des installations pour le contrôle automatique de l'impression de la qualité d'une image multichrome ont été plus spécialement, mais non uniquement développés pour le contrôle de la qualité d'impression de papiers-valeur tels que des billets de banques ou des papiers fiduciaires. Les différents procédés et installations de contrôle automatique de la qualité d'impression effectuent un contrôle en comparant pixel par pixel ou ensemble de pixels de certaines parties caractéristiques d'une image avec une image de référence. L'image a contrôler est saisie par un système des caméras permettant d'effectuer une saisie par canal chromatique et on compare ces résultats avec les résultats de la saisie d'une image de référence. On considère qu'une partie d'une image est défectueuse lorsque la valeur densitométrique d'un pixel dans les composantes chromatiques s'éloigne du modèle d'une certaine valeur préalablement déterminée et qui dépend essentiellement du degré de la qualité d'impression que l'on désire.

Les procédés et dispositifs de contrôle automatique de la qualité d'impression en couleur permettent, bien entendu, des résultats supérieurs aux résultats obtenus par des systèmes monochromatiques. Néanmoins, le volume de données à saisir et à contrôler est beaucoup plus important que pour un contrôle monochromatique, ce qui rend l'opération coûteuse. Si l'on désire obtenir la même'vitesse que lorsqu'on procède à un contrôle de qualité monochromatique, les dispositifs utilisés doivent être puissants, ce qui renchérit leur coût. Ainsi, pour un contrôle multichrome, par exemple pour les trois couleurs de base, rouge, vert et bleu, le nombre de canaux est multiplié par trois et les opérations effectuées sont également multipliées par trois par rapport à une inspection monochromatique.

L'objet de la présente invention est de permettre un contrôle de qualité d'une image multichrome de manière automatique, mais en diminuant sensiblement le coût sans que cette diminution ne nuise à la capacité de détection chromatique des défauts de l'image à contrôler.

Un autre objectif est d'augmenter la capacité de détection des défauts par rapport aux systèmes multichromes usuels.

Le procédé selon l'invention est caractérisé par la clause caractérisante de la rev.1.

Les avantages du procédé selon l'invention sont le fait que bien qu'on procède au contrôle d'une image multichrome, le signal servant au contrôle effectif, c'est-à-dire la comparaison avec l'image de référence utilise un seul canal car le signal en question est constitué par une fonction de chacun des canaux chromatiques permettant d'amplifier la détectabilité de la différence de chacune des valeurs saisie, par rapport à la valeur correspondante d'une image de référence.

Le procédé ainsi défini par la présente invention permet d'un côté de diminuer le coût de traitement du signal multi-canal et d'autre part, de ne pas diminuer la détectabilité de l'importance des défauts chromatiques qui pourraient être présents dans l'un ou l'autre des canaux chromatiques par le choix judicieux de la fonction et des coefficients.

De la même manière, en choisissant judicieusement les coefficients on peut amplifier la réponse chromatique dans une bande plus significative pour la partie de l'image inspectée.

Selon une variante d'exécution de l'invention, les coefficients sont définis automatiquement, par exemple lors de la saisie de l'image de référence.

Selon une autre variante d'exécution, les coefficients sont déterminés par l'opérateur.

Selon une autre variante, la partie de l'image à laquelle correspond la matrice de coefficents peut être de l'ordre du pixel.

Selon une autre variante d'exécution, la fonction choisie est définie selon une approximation de la réponse de l'oeil humain aux différences de couleurs.

Selon une autre variante d'exécution, la fonction F est décomposée à un ensemble des fonctions partielles s'appliquant sur une partie des signaux chromatiques.

Selon une autre variante d'exécution, on peut déterminer plus d'une matrice de coefficients pour chaque partie à contrôler pour tenir compte des variations acceptables par rapport à l'image de référence.

L'invention sera décrite plus en détail à l'aide du dessin annexé.

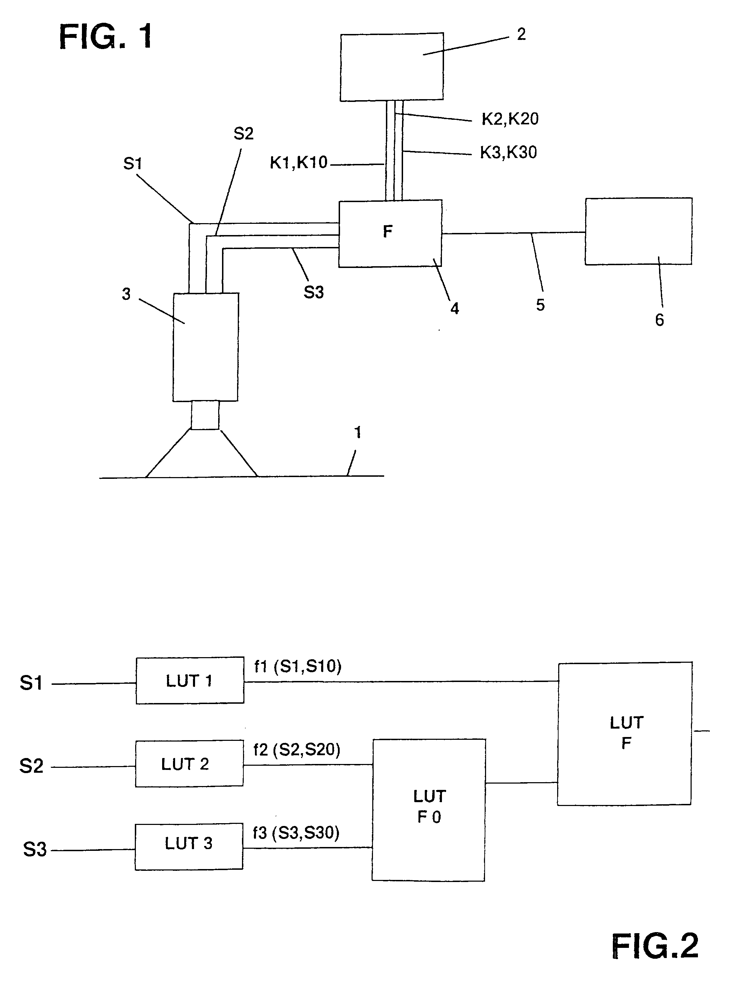

Les figures 1 et 2 représentent une vue schématique de deux installations pour la mise en oeuvre du procédé.

Bien que le procédé puisse être appliqué pour le contrôle de qualité d'impression multichrome sur n'importe quel objet, nous avons représenté ici une feuille de papier 1 soumise à un contrôle de qualité de l'impression se trouvant sur cette feuille. Préalablement, on détermine une matrice de coefficients Ki, Ki0 pour les parties à contrôler, une partie pouvant être même de la taille du pixel, et on mémorise ces coefficients dans un dispositif de stockage 2. Les matrices avec les coefficients Ki, Ki0 sont déterminées soit par l'opérateur en fonction de l'image à contrôler, soit de manière automatique, par exemple en saisissant le modèle de référence, un logiciel approprié permettant de générer les coefficients pour chaque partie à contrôler selon des critères prédéterminés.

Par la suite, au moyen d'un dispositif optoélectronique 3 agencé pour saisir chaque canal chromatique, on saisit l'image imprimée sur l'objet 1. Ce dispositif électronique peut être un groupe de caméras matricielles ou linéaires ou tout autre dispositif équivalent. Habituellement, mais non exclusivement, trois canaux chromatiques sont utilisés, le rouge, le vert et le bleu. Ces trois canaux S1, S2, S3 envoient leurs signaux dans un dispositif 4 permettant d'appliquer la fonction F aux signaux émis par le dispositif 3. Les coefficients K1, K10, K2, K20, K3, K30 sont introduits dans le dispositif par des lignes appropriées.

Après avoir obtenu la fonction F de ces trois signaux, un seul signal 5 est fourni à un dispositif 6 permettant le traitement du signal pour le contrôle de la qualité de l'impression. Ce dispositif est un dispositif habituel effectuant le contrôle de qualité monochromatique. Il est évident qu'auparavant l'image de référence a été saisie de la même manière et un signal unique composé de la somme pondérée des différents signaux émis par les canaux chromatiques a été réalisé.

Si l'on considère la fonction $F = \Sigma k_i (S_i - K_{i0} S_{i0})$ i = 1 à n, on peut distinguer différent cas

  1. Si $K_{i0} = 0$ on obtient la simple combinaison de canaux chromatiques de l'image contrôlée, ce qui ne permet pas de comparer avec l'image de référence.

  2. Si $K_{i0} = 1$, on obtient la somme pondérée de la différence de chacun des signaux chromatiques par rapport à la valeur de l'image de référence.

On peut aussi utiliser une fonction correspondant à une approximation de la réponse de l'oeil humain aux différences de couleurs qui peut être déterminée de la façon suivante : $F (S_i, S_{i0}) = f (K_i \log S_i/S_{i0})$.

Selon une autre variante d'exécution, on peut décomposer la fonction F en fonctions partielles s'appliquant sur une partie de signaux, par exemple dans le cas de trois signaux on aura

$$F (S_1, S_{10}, S_2 S_{20}, S_3 S_{30}) = F (f_1 (S_1, S_{10}) , F_0 (f_2 (S_2, S_{20}), f_3 (S_3, S_{30}))).$$

Aussi bien pour la mise en oeuvre de cette fonction, que pour la mise en oeuvre de la fonction citée précédemment, le dispositif 4 comprend une ou plusieurs tables de correspondance (look up table).

Nous avons représenté à la figure 2 le cas de la fonction F précédente au moyen de cinq tables LUT,

$$F (S_i, S_{i0}) = \Sigma K_i(S_i - K_{i0} S_{i0})$$

  LUT 1 réalise $K_1 (S_1 - K_{10} S_{10})$
  LUT 2 réalise $K_2 (S_2 - K_{20} S_{20})$
  LUT 3 réalise $K_3 (S_3 - K_{30} S_{30})$

tandis que LUT F0 réalise

$$K_2 (S_2 - K_{20} S_{20}) + K_3 (S_3 - K_{30} S_{30})$$

et LUT F la somme de résultats obtenus à la sortie de LUT 1 et LUT F0.

Le procédé présente l'avantage supplémentaire de permettre d'amplifier la réponse chromatique dans une bande plus significative pour la portion de l'image à contrôler. Ainsi, par exemple, si l'on est en train d'examiner une image avec une majorité de couleur rouge, le canal le plus significatif pour l'inspection est le bleu. Dans ce cas là, on choisira les coefficients de sorte à minimiser l'influence du rouge et vert, tandis que l'on maximisera celui du bleu. De cette manière, on amplifie la réponse chromatique dans la bande qui est la plus appropriée en fonction de l'image à contrôler au lieu de donner le même poids à chacun des signaux émis par les différents canaux chromatiques. Ainsi, dans le cas où une zone ou un pixel est blanc, la valeur de chacun des coefficients sera égal par exemple à 1.

Il est évident que d'autres fonction permettent d'augmenter la détectabilité des différences entre l'image à contrôler et l'image de référence.

## Revendications

1. Procédé de traitement des signaux pour un contrôle automatique de la qualité d'impression d'une image multichrome au moyen d'au moins un dispositif optoélectronique permettant d'obtenir un signal $S_i$ par canal chromatique, caractérise en ce que l'on combine les signaux $S_i$ de canaux chromatiques obtenus pour une même image ou partie de l'image de sorte à obtenir un seul signal qui sera fourni à un dispositif de contrôle automatique de la qualité d'impression pour chaque image ou partie de l'image par rapport à une image ou partie d'une image de référence, la combinaison desdits signaux étant une fonction F, d'une part, des signaux $S_i$ de canaux chromatiques et, d'autre part, des signaux $S_{i0}$ de canaux chromatiques d'une image ou d'une partie correspondante d'une image de référence, ladite fonction ayant des coefficients qui sont déterminés pour l'image ou partie de l'image à contrôler soit automatiquement soit pour l'opérateur, de sorte que ladite fonction maximise la détectabilité des différences $S_i - S_{i0}$ entre l'image contrôlée et l'image de référence.

2. Procédé selon la revendication 1, caractérisé par le fait que ladite fonction F a la forme :

$$F (S_i, S_{i0}) = \Sigma K_i(S_i - K_{i0}S_{i0}),$$

i variant de 1 à n, n étant le nombre de canaux chromatiques utilisés pour le contrôle, et $K_i$ et $K_{i0}$ des

coefficients adéquats.

3. Procédé selon la revendication 2, caractérisé en ce que l'on détermine pour chaque image ou partie de l'image à contrôler une matrice de coefficients Ki, Ki0, on saisit l'image à contrôler au moyen d'un dispositif optoélectronique de sorte à obtenir un signal Si par canal chromatique, que l'on introduit les signaux Si et les coefficients Ki, Ki0 correspondant à la partie de l'image à contrôler dans la fonction F.

4. Procédé selon la revendication 3, caractérisé par le fait que la matrice de coefficients Ki, Ki0 est déterminée automatiquement en fonction de la distribution chromatique de l'image de référence.

5. Procédé selon la revendication 3, caractérisé par le fait que la matrice de coefficients de Ki, Ki0 est déterminée par l'opérateur.

6. Procédé selon la revendication 1, caractérisé par le fait que ladite fonction est F (Si, Si0) = f (Ki log Si/Si0) i variant de 1 à n, n étant le nombre de canaux chromatiques utilisés par l'appareil de contrôle, ladite fonction correspondant à une approximation de la réponse de l'oeil humain aux différences de couleurs.

7. Procédé selon l'une des revendications 1 à 6 caractérisé par le fait que dans le cas des trois canaux chromatiques ladite fonction a la forme F (S1, S10, S2, S20, S3, S30) = F (f1 (S1, S10), F0 (f2 (S2, S20), f3 (S3, S30))).

8. Procédé selon l'une des revendications 1 à 7, caractérisé par le fait que la partie de l'image contrôlée est de la taille du pixel.

9. Procédé selon l'une des revendications 1 à 8, caractérisé par le fait que l'on définit plus d'une matrice de coefficients pour chaque partie de l'image à contrôler pour tenir compte des variations acceptables de l'image à contrôler par rapport à l'image de référence.

**Patentansprüche**

1. Verfahren zum Verarbeiten von Signalen zur automatischen Druckqualitätskontrolle eines Mehrfarbenbildes mittels wenigstens einer optoelektronischen Vorrichtung, die es erlaubt, ein Signal Si je Farbkanal zu erhalten, dadurch gekennzeichnet, dass die Signale Si der Farbkanäle, die für ein und dasselbe Bild oder Teil des Bildes erhalten wurden, derart kombiniert werden, dass ein einziges Signal erhalten wird, welches einer automatischen Vorrichtung zur Druckqualitätskontrolle für jedes Bild oder Teil des Bildes im Vergleich zu einem Bezugsbild oder Teil desselben zugeführt wird, wobei die Kombination der erwähnten Signale eine Funktion F einerseits der Signale Si der Farbkanäle und andererseits der Signale Si0 der Farbkanäle eines Bezugsbildes oder eines entsprechenden Teils eines Bezugbildes ist und die erwähnte Funktion Koeffizienten aufweist, die für das zu kontrollierende Bild oder Teil des Bildes entweder automatisch oder vom Bedienenden bestimmt werden, derart, dass die erwähnte Funktion die Nachweisbarkeit der Unterschiede (Si - Si0) zwischen dem zu kontrollierenden und dem Bezugsbild maximiert.

2. Verfahren nach Anspruch 1, dadurch gekennzeichnet, dass die erwähnte Funktion F die Form hat:

$$F(Si, Si0) = \Sigma Ki(Si - Ki0Si0),$$

wobei i von 1 bis n variiert und n die Anzahl der für die Kontrolle verwendeten Farbkanäle ist und Ki und Ki0 geeignete Koeffizienten sind.

3. Verfahren nach Anspruch 2, dadurch gekennzeichnet, dass für jedes zu kontrollierende Bild oder Teil des Bildes eine Matrix der Koeffizienten Ki, Ki0 bestimmt wird, dass das zu kontrollierende Bild mittels einer optoelektronischen Vorrichtung erfasst wird, derart, dass ein Signal Si je Farbkanal erhalten wird, und dass die Signale Si sowie die dem zu kontrollierenden Teil des Bildes entsprechenden Koeffizienten Ki, Ki0 in die Funktion F eingeführt werden.

4. Verfahren nach Anspruch 3, dadurch gekennzeichnet, dass die Matrix der Koeffizienten Ki, Ki0 automatisch als Funktion der Farbverteilung des Bezugsbildes bestimmt wird.

5. Verfahren nach Anspruch 3, dadurch gekennzeichnet, dass die Matrix der Koeffizienten Ki, Ki0 durch den Bedienenden bestimmt wird.

6. Verfahren nach Anspruch 1, dadurch gekennzeichnet, dass die erwähnte Funktion F(Si,Si0) = f(Ki log Si/Si0) ist, wobei i von 1 bis n variiert und n die Zahl der vom Kontrollapparat verwendeten Farbkanäle ist und die erwähnte Funktion einer Näherung der Empfindlichkeit des menschlichen Auges für die Farbunterschiede entspricht.

7. Verfahren nach einem der Ansprüche 1 bis 6, dadurch gekennzeichnet, dass im Falle dreier Farbkanäle die erwähnte Funktion die Form F(S1, S10, S2, S20, S3, S30) = F(f1(S1, S10), F0(f2(S2,S20), f3 (S3,S30))) hat.

8. Verfahren nach einem der Ansprüche 1 bis 7, dadurch gekennzeichnet, dass das Teil des kontrollierten Bildes von der Grösse des Pixels ist.

9. Verfahren nach einem der Ansprüche 1 bis 8, dadurch gekennzeichnet, dass mehr als eine Koeffizientenmatrix für jedes Teil des zu kontrollierenden Bildes definiert wird, um die akzeptablen Variationen des zu kontrollierenden Bildes im Vergleich zum Bezugsbild zu berücksichtigen.

**Claims**

1. A method of processing signals for automatically checking the printing quality of a multicolor image by means of at least one optoelectronic device enabling one signal Si per chromatic channel to be obtained, wherein the signals Si of chromatic channels obtained for the same image or part of the image are combined so as to obtain a single signal which will be delivered to a device for automatically checking the printing quality for each image or part of the image with respect to a reference image or part of a reference image, the combination of said signals being a function F, on the one hand, of the signals Si of chromatic channels and, on the other hand, of the signals Si0 of chromatic channels from a reference image or a corresponding part of a reference image, said function having coefficients which are determined for the image or the part of the image to check either automatically or by the operator, so as said function maximizes the detectability of differences Si-Si0 between the checked image and the reference image.

2. The method according to claim 1, wherein said function F has the form:

$$F (Si, Si0) = \Sigma Ki(Si-Ki0\ Si0),$$

i varying from 1 to n, n being the number of chromatic channels used for the checking operation and Ki and Ki0 being suitable coefficients.

3. The method according to claim 2, wherein a matrix of coefficients Ki, Ki0 is determined for each image or part of the image to be checked, wherein the image to be checked is captured by means of an optoelectronic device so as to obtain one signal Si per chromatic channel and wherein the values of signals Si and the coefficients Ki, Ki0 corresponding to the part of the image to be checked are introduced into the function F.

4. The method according to claim 3, wherein the matrix of coefficients Ki, Ki0 is determined automatically as a function of the chromatic distribution of the reference image.

5. The method according to claim 3, wherein the matrix of coefficients Ki, Ki0 is determined by the operator.

6. The method according to claim 1, wherein said function is F (Si, Si0) = f (Ki log Si/Si0), i varying from 1 to n, n being the number of chromatic channels used by the checking apparatus, said function corresponding to an approximation of the human eye's response to differences in color.

7. The method according to one of the claims 1 to 6, wherein, in the case of three chromatic channels, said function has the form F (S1, S10, S2, S20, S3 S30) = F (f1 (S1, S10), F0 (f2 (S2, S20), f3 (S3, S30))).

8. The method according to one of the claims 1 to 7, wherein the part of the checked image is of the size of one pixel.

9. The method according to one of the claims 1 to 8, wherein more than one matrix of coefficients is defined for each part of the image to be checked in order to take into account acceptable variations in the image to be checked with respect to the reference image.

# FIG. 1

# FIG.2